# EUROPÄISCHE PATENTSCHRIFT

(11) **EP 2 688 737 B1**
(45) Veröffentlichungstag und Bekanntmachung des Hinweises auf die Patenterteilung: **08.06.2016**
(21) Anmeldenummer: 12706493.9
(22) Anmeldetag: 01.02.2012
(51) Int. Cl.: B29D 23/20, B29C 53/50, B29C 53/82, B31B 1/64, B65B 51/18

(54) **VORRICHTUNG ZUM HERSTELLEN VON TUBENKÖRPERN**
DEVICE FOR PRODUCING TUBULAR STRUCTURES
DISPOSITIF DE FABRICATION DE CORPS DE TUBE

(30) Priorität: 24.03.2011 DE 102011001547; 24.03.2011 DE 102011001546; 10.06.2011 DE 202011050418 U; 10.06.2011 DE 202011050417 U; 14.10.2011 EP 11185239
(43) Veröffentlichungstag der Anmeldung: 29.01.2014
(73) Patentinhaber: PackSys Global (Switzerland) Ltd., 8630 Rüti (CH)
(72) Erfinder: WEBER, René, 8496 Steg (CH)
(74) Vertreter: Wagner, Kilian
(86) Internationale Anmeldenummer: PCT/EP2012/051674
(87) Internationale Veröffentlichungsnummer: WO 2012/126656

(56) Entgegenhaltungen:
- EP-A1- 0 498 764
- WO-A1-94/04343
- CH-A5- 680 350
- DE-A1- 4 315 067
- DE-B3-102004 004 932
- FR-A- 1 418 537
- JP-A- 55 109 649

## Beschreibung

Die Erfindung betrifft eine Vorrichtung gemäß Anspruch 1 zum Herstellen von Tubenkörpern für Verpackungstuben, umfassend einen sich in einer Axialrichtung erstreckenden, langgestreckten Dorn, um welchen eine Substratbahn zur Herstellung einer Rohrform umformbar ist, wobei in den Dorn mehrere Gasaustrittsöffnungen zur Erzeugung eines Luftkissens zwischen dem Dorn und der Rohrform vorgesehen sind. Ferner betrifft die Erfindung ein Verfahren gemäß Anspruch 12 zum Herstellen von Tubenkörpern für Verpackurigstuben.

Allgemein ist in der DE 41 21 427 C2 eine Vorrichtung zum Herstellen von Tubenkörpern beschrieben. Dabei wird eine endlose Substratbahn, in der Regel ein Laminat, insbesondere ein Kunststofflaminat, welches je nach Anwendung eine Metallfolie oder eine Metallisierungsschicht umfassen kann, um einen langgestreckten, zylindrischen Dorn umgeformt, derart, dass ein Überlappungsbereich zwischen zwei Längskanten gebildet wird, wobei der Überlappungsbereich zur Herstellung der Rohrform mit geeigneten Schweißmitteln, insbesondere einer Hochfrequenzschweißeinrichtung verschweißt und in Richtung der Längserstreckung des Dorns weitertransportiert wird. In axialer Richtung beabstandet zu der Schweißeinrichtung ist in der Regel eine Schneidvorrichtung vorgesehen, mit welcher der hergestellte Rohrstrang in Tubenkörper gewünschter Axialerstreckung abgelängt wird. Üblicherweise ist bei bekannten Vorrichtungen zum Herstellen von Tubenkörpern in Transportrichtung der Substratbahn bzw. der Rohrform hinter den Schweißmitteln eine Kühleinrichtung vorgesehen, entlang derer die Rohrform gleitet, und die die mit Hilfe der Schweißmittel hergestellte Schweißnaht von radial außen abkühlt. Hierdurch entsteht ein erheblicher Raumbedarf für die Gesamtvorrichtung.

Ein weiteres Problem aus der Praxis der Verpackungstubenherstellung mit oben beschriebenen Vorrichtungen besteht in der verbesserungsbedürftigen Rundheit des Rohrkörpers.

Aus der Praxis ist es bekannt, an dem Dorn an zwei um 180° voneinander abgewandten Positionen jeweils ein Luftaustrittsloch mit einem Durchmesser von mehreren Millimetern vorzusehen, wobei die beiden Luftaustrittslöcher nicht unmittelbar an der Zylindermantelfläche, d.h. nicht an der gekrümmten Dornoberfläche angeordnet sind, sondern an jeweils einer seitlichen, ebenen Abflachung, die sich radial innerhalb der zylindrischen Hüllkontur des Dorns befinden. Aus den Luftaustrittslöchern tritt Druckluft aus, wodurch die Reibung in einem unmittelbar an die beiden Löcher angrenzenden Bereich zwischen der Rohrform und dem Dorn reduziert werden soll.

Je nach Materialwahl des Substrates kommt es trotz der zwei Luftausgangslöcher zu erheblichen Reibungserscheinungen zwischen der Rohrform und dem Dorn und ggf. sogar zu Abschürfungen, die zum einen eine Kontamination des Tubenrohrinneren mit Abriebsstaub zur Folge haben und die zudem regelmäßige Säuberungen des Dorns notwendig machen. Darüber hinaus kann es zu unerwünschten Kratzern im Tubenrohr kommen. Dies ist unter anderem darauf zurückzuführen, dass die Rohrform mit Hilfe von konkav konturierten Rollen oder Bändern in radialer Richtung nach innen auf die zylindrische Dornoberfläche kraftbeaufschlagt und aufgrund der Reibwirkung zwischen den Rollen bzw. den Bändern und der Rohrform in Transportrichtung transportiert wird.

Die Kontamination der Rohrkörper mit Abriebstaub ist insbesondere problematisch bei der Herstellung von Tuben für die Pharmaindustrie, da hier zum einen ein hoher Reinheitsgrad gefordert ist und zum anderen in der Regel Materialien mit einem hohen Reibungskoeffizienten zum Einsatz kommen.

Aus der fachfremden US-Druckschrift US 2,987,765 ist eine Vorrichtung zur Extrusion von sehr dünnwandigen und aufwickelbaren PET- oder PVC-Folienschläuchen bekannt. Im Unterschied zu Tubenkörperherstellungsvorrichtungen, die mit kalten Laminatsubstraten arbeiten, wird bei der bekannten Extrusions-Vorrichtung erhitztes und dadurch fluides PET oder PVC durch eine Extrusionsdüse gepresst. Es entsteht ein heißer Folienschlauch, der über einen Dorn geführt wird, der aus porösem Material ausgebildet ist. Durch die Poren in der Dornoberfläche wird Druckluft ausgeblasen, um die Temperatur des geschmolzenen Films zu regulieren und um die Dimension des Folienschlauches einzustellen. Im Gegensatz zu Tubenkörper-Herstellungsvorrichtungen weist die bekannte Extrusionsvorrichtung zur Herstellung von Folienschläuchen keine Formmittel auf, die das heiße Extrusionsprodukt in Richtung auf den Dorn pressen, so dass mit größeren Reibungsproblem bei der bekannten Folienextrusionsvorrichtung nicht zu rechnen ist. Das mit der bekannten Vorrichtung erzeugte Luftpolster hat eine vollumfängliche Dicke (Radialerstreckung) zwischen 75µm und 500µm. Der Volumenstrom pro Flächeneinheit beträgt bei der bekannten Vorrichtung 150cm³/min x cm². Der Luftdruck des erzeugten Luftposters beträgt 0,3bar. Bei der bekannten Extrusionsvorrichtung spielt ein gewisses Schwimmen des Schlauches auf dem Dorn keine Rolle, muss jedoch bei Tubenkörper-Herstellungsvorrichtungen vermieden werden.

Bei der bekannten Extrusionsvorrichtung ist als Transportmechanismus zum Transport des Schlauchs ausschließlich eine Zugeinrichtung vorgesehen, mit welcher Zugkräfte auf den Schlauch aufgebracht und dieser auf eine Rolle aufgewickelt wird. Ein solches Vorgehen würde bei der Tubenkörperherstellung zur Zerstörung der Produkte führen.

Die DE 43 15 067 A1 beschreibt eine Vorrichtung und ein Verfahren zum Herstellen von Schlauchbeuteln und nicht zur Herstellung von Tubenrohren. Der mittels der bekannten Vorrichtung hergestellte Schlauch aus flexiblen Material wird am Ende des Produktionsprozesses aufgerollt. Aus der Druckschrift ist es bekannt, im Bereich unterhalb des Schweiß- oder Siegelkopfes einen Sintermetallstreifen vorzusehen, um ein Gaspolster zu erzeugen, das eine Breite besitzt, die mindestens dem durch den Schweiß- bzw. Siegelvorgang aufgeschmolzenen Materialbereich entspricht.

Zum weiteren Stand der Technik werden die FR 1 418 537 A, die WO 94/04343 A1, die CH 680 350 A5, die EP 0 498 764 A1, die JP 55 109649 A sowie die DE 10 2004 004932 B3 genannt.

Ausgehend von dem vorgenannten Stand der Technik liegt der Erfindung die Aufgabe zugrunde, eine Vorrichtung anzugeben, mit der Kratzer im Tubenrohr sowie Abschürfungserscheinungen reduziert, vorzugsweise vermieden werden, um die Kontamination des Tubenrohrs mit Staub zu minimieren und Wartungsbzw. Säuberungsintervalle des Dorns zu vergrößern. Ferner besteht die Aufgabe darin, ein entsprechend verbessertes Verfahren anzugeben.

Bevorzugt soll mit der Vorrichtung eine höhere Stückzahl an Tubenkörpern pro Zeiteinheit herstellbar sein. Insbesondere soll sich die Vorrichtung zum Herstellen von Tuben für die Pharmaindustrie eignen. Bevorzugt soll der Raumbedarf der Vorrichtung minimiert werden. Noch weiter bevorzugt soll gleichzeitig die Rundheit der Rohrkörper verbessert werden

Diese Aufgabe wird hinsichtlich der Vorrichtung mit den Merkmalen des Anspruchs 1 und hinsichtlich des Verfahrens mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Auf dem vorliegenden technischen Gebiet der Herstellung von flexiblen, d.h. nicht starren, Tubenkörpern für Verpackungstuben, insbesondere aus einem Laminatmaterial besteht das besondere Problem, dass die flexible Substratbahn als Rohrform den Dorn um mindestens 360° umschlingt, sobald die Substratbahn zu einer Rohrform umgeformt wurde, bei der sich zwei Längsrandbereiche der Substratbahn berühren. Unter "Rohrform" wird dabei der Zustand verstanden, bei welchem der Umschlingungswinkel mindestens 360° beträgt - ein Verschweißen muss noch nicht stattgefunden haben. Bevorzugt kommt als Substrat ein Laminat zum Einsatz, insbesondere umfassend mindestens eine Barriereschicht. Das Laminat kann ausschließlich aus Kunststoffschichten bestehen. Auch ist es möglich, dass neben einer Kunststoffschicht mindestens eine Nicht-Kunststoffschicht, beispielsweise aus Aluminium oder SiOx vorgesehen wird. Bevorzugt hat das zum Einsatz kommende Substrat eine Dickenerstreckung (Stärke) aus einem Wertebereich zwischen 75µm und 500µm, vorzugsweise zwischen 150µm und 400µm.

Diese Rohrform gleitet nicht ohne Weiteres entlang des Dorns, sondern wird von radial außen nach radial innen mit Hilfe entsprechender Mittel kraftbeaufschlagt, unter anderem um eine ausreichende Haftreibung zwischen den Mitteln und der Rohrform zu erzeugen, die sicherstellt, dass die Rohrform mit Hilfe der Mittel in axialer Richtung, d.h. in Richtung der Längserstreckung des Dorns transportiert wird. Gleichzeitig wird durch die Anpressmittel ein Schwimmen bzw. ein dadurch mögliches Verdrehen der Rohrform auf dem Dorn verhindert. Ein Schwimmen und insbesondere ein vorgenanntes Verdrehen der Rohrform auf dem Dorn gilt es unbedingt zu vermeiden, da ansonsten die im Gegensatz zu Extrusionsprozessen notwendige Schweißnaht nicht mehr ausgebildet werden kann, da der Überlappungs- oder Stoßbereich der Substratlängskanten nicht mehr im Schweißbereich, d.h. unterhalb der Schweißmittel verläuft. Ein Gaspolster mit zu großer Radialerstreckung würde die Schwimm- bzw. Verdrehneigung erhöhen. Dadurch, dass die flexible Substratbahn unmittelbar mechanisch radial außen kraftbeaufschlagt und nach radial innen gedrückt wird, erhöhen sich die Reibungsverhältnisse zwischen Rohrform und Dorn dramatisch. Dieser Effekt wird noch weiter dadurch verstärkt, dass die Substratbahn eine Rohrform bildet und üblicherweise die Längsrandbereiche der Rohrform zum Ermöglichen des Schweißprozesses in einander entgegengesetzte Umfangsrichtungen mit Hilfe der Mittel kraftbeaufschlagt werden. Durch die Umschlingung wird die Reibwirkung zusätzlich erhöht. Um das Schwimmen bzw. das Drehen der Rohrform zu vermeiden dienen die zuvor angedeuteten Anpressmittel, insbesondere in Form mindestens einem Formbandes die gleichzeitig sicherstellen, dass das Gaskissen lokal eine nur geringe Radialerstreckung aufweist, insbesondere zwischen 3µm und 50mµ, vorzugsweise zwischen 5µm und 35µm, noch weiter bevorzugt zwischen 5µm und 25µm. Anders ausgedrückt ist es weiterbildungsgemäß vorgesehen, durch Erzeugen eines in Bezug auf seine Radialerstreckung in homogenen Gaskissens einem Schwimmen bzw. Verdrehen der Rohrform entgegenzuwirken. Anders ausgedrückt wirken die Anpressmittel lokal unterschiedlich, so dass es in Bezug auf das Gaskissen Bereiche unterschiedlicher Radialerstreckung gibt, wobei vorzugsweise in zumindest einem Bereich, weiter vorzugsweise in mehreren Bereichen, eine nur geringe Radialerstreckung des Gaskissens in dem zuvor erwähnten Wertebereich erzeugt wird.

Der Erfindung liegt der Gedanke zugrunde, ein, vorzugsweise umfangsgeschlossenes Gaspolster zwischen der zu einem Rohr umgeformten Substratbahn und dem Dorn herzustellen, das eine vergleichsweise große Axialerstreckung und bevorzugt auch eine größere Umfangserstreckung aufweist als das bisher von zwei einzelnen, vergleichsweise großen Luftaustrittslöchern erzeugte Luftkissen, in dem der Dorn, zumindest abschnittsweise aus mikro- und/oder nanoporösem Material ausgebildet wird und somit eine Vielzahl kleiner Gasaustrittsöffnungen in Form von Poren bereitgestellt wird, durch die das Druckgas ausströmen kann. Zum Beaufschlagen der Gasaustrittsöffnungen mit Druckgas ist selbstverständlich eine mit dem Dorn verbundene Druckgasquelle vorgesehen. Im Gegensatz zum Stand der Technik sind also eine Vielzahl von kleinsten Gasaustrittsöffnungen vorgesehen, die sich unmittelbar in der gekrümmten Dornoberfläche befinden. Hierdurch wird die Ausbreitung bzw. Gleitwirkung des erfindungsgemäßen Gaskissens wesentlich verbessert.

Erfindungsgemäß ist vorgesehen den Dorn, zumindest abschnittsweise, d.h. zumindest in einem Flächenabschnitt mit einem porösen Material zu versehen, vorzugsweise zumindest abschnittsweise aus diesem auszubilden, wobei im Falle des Vorsehens von porösem Material unter den Gasaustrittsöffnungen die Poren des porösen, vorzugsweise geschäumten Materials zu verstehen sind.

Die zuvor beschriebenen Gasaustrittsöffnungen in Form von Poren stellen also sicher, dass die Reibung zwischen dem, insbesondere als Laminat ausgebildeten Substrat und dem Dorn minimiert wird. Das erzeugte Gaskissen wirkt also dem Anpressdruck der kombinierten Anpress- und Fördermittel, insbesondere in Form mindestens eines Formbandes und/oder einer Anpressrolle entgegen. Dabei ist das System vorzugsweise so aufgebaut, dass sich ein nennenswerter Druckaufbau des Gaskissens erst dann ergibt bzw. erst dann stattfindet, wenn sich das Substrat auf wenige Mikrometer, insbesondere aus einem Wertebereich zwischen 3µm und 50µm, insbesondere zwischen 5µm und 40µm, noch weiter bevorzugt zwischen 5µm und 25µm dem Dorn nähert. Dies geschieht insbesondere aufgrund der Wirkung der Anpressmittel nicht vollumfänglich, sondern ist auf Teilflächen begrenzt. Es ergeben sich bevorzugte Gasvolumenströme zwischen etwa 1 cm³ und 50cm³/min x cm² bezogen auf die poröse Dornoberfläche. Durch die Wirkung der Anpressmittel und dem dadurch erzielten, zumindest lokal sehr geringen Abstand zwischen vorzugsweise 5µm und 25µm zwischen Substrat und Dorn steigt der Druck des Gaskissens lokal, d.h. in Bereichen geringen Abstandes auf einen Wert aus einem Wertebereich zwischen etwa 1 bar und 6bar. Dieser Druck ist notwendig, um eine entsprechende Gegenkraft gegen die anpressenden Anpressmittel, insbesondere das Formband aufbringen zu können. Um dies zu gewährleisten, muss die Druckgasversorgung entsprechend ausgelegt bzw. auf die Porosität des Dornmaterials abgestimmt sein. Die Beschaffenheit und Dicke des Substratmaterials ist dabei so beschaffen, dass eine Aufweitung des, vorzugsweise zwischen den Schweißbändern der Schweißeinrichtung geklemmten Substrates bzw. der Rohrform unterbleibt.

Ganz besonders bevorzugt sind die Gasaustrittsöffnungen als nach außen offene Poren in einem, vorzugsweise metallischen oder keramischen, porösen, insbesondere mikroporösen Material ausgebildet. Bei diesem Material kann es sich beispielsweise um Sintermaterial oder durch thermisches Spritzen hergestelltes Material oder einen Metallschaum handeln.

Als besonders zweckmäßig hat es sich, wie zuvor ausgeführt, herausgestellt, wenn die Gasaustrittsöffnungen, zumindest zum Teil, vorzugsweise sämtliche Gasaustrittsöffnungen von (mikro- und/oder nanoskaligen) Poren in einem mikroporösen Material gebildet sind, wobei es sich im Falle des Vorsehens von mikroporösem Material beispielsweise um Sintermaterial oder ein durch thermisches Spritzen hergestelltes poröses Material oder um geschäumtes Material handelt. Die Poren eines solchen mikroporösen Materials haben im Vergleich zu mechanisch hergestellten Gasaustrittsöffnungen wesentlich kleinere Querschnitte, so dass ein fein verteiltes Luftpolster erzeugbar ist. Bevorzugt ist der mittlere Porendurchmesser (mittlerer Querschnitt) bei dem mikroporösen Material aus einem Wertebereich zwischen 0,05µm und 2mm, vorzugsweise zwischen 0,1µm und 1mm, bevorzugt zwischen 1µm und 500µm, noch weiter bevorzugt zwischen 1µm und 100µm.

Im Fall des Einsatzes von nanoporösem Material ist dieses bevorzugt derart beschaffen, dass in diesem Nanomaterial gasdurchlässige Zwischenräume (Poren) ausgebildet sind, deren mittlere Querschnitte im Bereich zwischen 1 und 100 nm liegen. Insbesondere weist das Nanomaterial dabei eine mittlere Molekülgröße (mittlerer Moleküldurchimesser) zwischen 1 und 100 nm auf, vorzugsweise von kleiner oder gleich 50 nm. Wie bereits angedeutet, handelt es sich bei dem Nanomaterial bevorzugt um einen metallischen Werkstoff, wobei sich besonders gute nanoporöse Eigenschaften auf Basis von Nickel realisieren lassen. Zusätzlich oder alternativ können als Nanomaterialien Aluminiumoxide, Siliziumoxide, Zirkonoxide, Titanoxide oder Mischungen daraus eingesetzt werden.

Zur Ausbildung der Gasaustrittsöffnungen ist es erfindungsgemäß vorgesehen den Dorn, zumindest abschnittsweise aus offenporigem Metallschaum auszubilden, wobei der Metallschaum beispielsweise als Aluminiumschaum ausgebildet sein kann. Auch ist es möglich den Metallschaum mit Keramikmaterial zu versetzen, um die Stabilität zu erhöhen. Denkbar ist es auch, dass der Metallschaum eine Art Träger für weiteres mikroporöses und/oder nanoporöses Material bildet, wobei dieses weitere, dann die Dornoberflächen bildende Material gesintert oder durch thermisches Spritzen oder durch Schäumen mit Treibgas hergestellt werden kann.

Ganz besonders bevorzugt ist es, wenn die Porengröße der Poren des mikroporösen Materials, insbesondere des Metallschaums hin zur Dornoberfläche abnimmt.

Zusätzlich oder alternativ zu mikroporösem Material kann nanoporöses Material zur Ausbildung der Gasaustrittsöffnungen vorgesehen werden, wobei es besonders bevorzugt ist, wenn ein vorerwähntes mikroporöses Material als Träger für das dann eine Art Beschichtung bildende nanoporöse Material dient. Bevorzugt beträgt die Molekülgröße des verwendeten Nanomaterials zwischen 0,5nm und 500nm, ganz besonders bevorzugt zwischen 0,5nm und 200nm. Bei dem Nanomaterial handelt es sich bevorzugt um einen metallischen Werkstoff, beispielsweise auf der Basis von Nickel, oder Zirkonoxid, oder Titanoxid, oder Siliziumoxid oder Aluminiumoxid.

Grundsätzlich ist es möglich, das poröse, insbesondere das mikroporöse und/oder das nanoporöse, Material selbsttragend auszubilden, d.h. eine so ausreichende Dickenerstreckung (Radialerstreckung) zu realisieren, dass keine Stützstruktur im Inneren notwendig ist. Bevorzugt ist jedoch eine Ausführungsform, bei der das poröse, insbesondere geschäumte Material aufgetragen ist auf einer Trägerstruktur. In diesem Fall kann eine geringe Dickenerstreckung des porösen, insbesondere mikroporösen und/oder nanoporösen, Materials realisiert werden, vorzugsweise aus einem Dickenerstreckungsbereich (Radialerstreckungsbereich) zwischen 0,5mm und 10mm, vorzugsweise zwischen 1mm und 5mm. Bevorzugt ist eine Trägerstruktur für das poröse Material so ausgebildet, dass für eine gleichmäßige Luftverteilung in axialer und/oder in Umfangsrichtung im Inneren des Dorn Sorge getragen ist.

Vorzugsweise wird der Tubenkörper in einem Bereich nach dem Dorn abgelängt. Bevorzugt ist die Vorrichtung frei von Mitteln zum Aufwickeln des Produktes auf eine Rolle.

Es hat sich als besonders vorteilhaft herausgestellt, wenn die mittlere Porengröße, d.h. dass arithmetische Mittel der Porengröße, aus einem Wertebereich zwischen etwa 0,05µm und 2mm, vorzugsweise zwischen 0,1 µm und 2mm gewählt wird. Grundsätzlich kommen für die Materialwahl zur Ausbildung des porösen Materials bzw. des porösen Materialabschnittes unterschiedliche Werkstoffe in Frage, so beispielsweise ein Metallschaum, ein Keramikschaum oder ein Kunststoffschaum. Das Material sollte so gewählt werden, dass es den Festigkeitsanforderungen entspricht.

Dies führt wiederum zu einer geringeren Staubkontamination des Tubenrohrinneren, zu glatteren Innenoberflächen und zu der Möglichkeit auch bisher nur schwierig oder nicht verwendbares, einen vergleichsweise großen Reibungskoeffizienten aufweisendes Substratmaterial, insbesondere für die Pharmaindustrie einzusetzen. Bevorzugt ist das Gaskissen so bemessen, dass das zur Rohrform umgeformte Substrat vollständig, insbesondere bis zum axialen Ende des Doms, auf dem Luftkissen gleitet, wodurch Reibungs- und damit Abriebseffekte zumindest weitgehend vermieden werden können.

Besonders zweckmäßig ist es, wenn die Gasaustrittsöffnungen, zumindest zum Teil, nicht in Abflachungen, Nuten, etc. d.h. innerhalb einer, bzw. rückversetzt zu einer, insbesonderen zylindrischen, Hüllkontur des Dorns angeordnet sind, sondern unmittelbar in der Zylindermantelfläche des Dorns, um eine gleichmäßigere Luftkissenausbildung zu ermöglichen.

Mit Hilfe des von radial innen die Rohrform beaufschlagenden Druckgases kann eine mit Hilfe der Schweißmittel hergestellte Schweißnaht und/oder die wie später noch erläutert werden wird bevorzugt zuvor erhitzte Rohrform abgekühlt werden, so dass ggf. auf separate, im Stand der Technik üblicherweise von radial außen wirkende Kühleinrichtungen zum Kühlen der Schweißnaht verzichtet werden kann. Das erfindungsgemäße Vorsehen der Vielzahl von Gasaustrittsöffnungen führt also zu einer Vorrichtung, die sich bei Verzicht auf eine zusätzliche Kühleinrichtung zum Kühlen der Schweißnaht durch einen geringeren Raumbedarf auszeichnet.

Besonders bevorzugt ist der mittlere Durchmesser der Gasaustrittsöffnungen aus einem Wertebereich zwischen 0,05µm und 2mm, vorzugsweise zwischen 0,1 µm und 1 mm, bevorzugt zwischen 1µm und 100µm, noch weiter bevorzugt zwischen 1µm und 10µm gewählt. Dieser geringe Durchmesser der Gasaustrittsöffnungen kann insbesondere dadurch gewährleistet werden, wenn die Gasaustrittsöffnungen, wie später noch erläutert werden wird, von Poren in einem mikroporösen und/oder nanoporösen Material gebildet sind. Insbesondere dann, wenn die Gasaustrittsöffnungen, zumindest zum Teil durch eine Nanomaterialstruktur gebildet sind, kann der mittlere Porendurchmesser wesentlich geringer ausfallen und beträgt bevorzugt weniger als 1 µm.

Die Erfindung hat erkannt, dass es zur Ausbildung eines im Vergleich zum Stand der Technik deutlich verbesserten Gaskissens, insbesondere Luftkissens vorteilhaft ist, eine möglichst große Anzahl an Gasaustrittsöffnungen, insbesondere für Druckluft im Dorn vorzusehen, durch welche Druckgas, insbesondere Druckluft von radial innen nach radial außen strömen kann. Ganz besonders bevorzugt sind mindestens zehn, vorzugsweise mindestens 50, oder mindestens 100, oder mindestens 150, oder mehr als 200, oder mehr als 300, oder mehr als 400, oder mehr als 500, oder bevorzugt mehr als 1000 oder mehrere tausend Gasaustrittsöffnungen vorgesehen. Bevorzugt befinden sich Gasaustrittsöffnungen über eine Axialerstreckung von mindestens 20%, vorzugsweise mindestens 30%, noch weiter bevorzugt von mindestens 50% der Gesamt-Axialerstreckung des Dorns, um über eine lange Strecke ein gutes Gaspolster zu realisieren.

Besonders zweckmäßig ist es, wenn mindestens zehn, vorzugsweise mindestens 20, vorzugsweise mindestens 50, noch weiter bevorzugt mindestens 100, ganz besonders bevorzugt mindestens 150, oder noch weiter bevorzugt mindestens 200 Gasaustrittsöffnungen oder mehr als tausend Gasaustrittsöffnungen an unterschiedlichen Axialpositionen entlang der Axialerstreckung des Dorns angeordnet sind.

Zusätzlich oder alternativ ist es bevorzugt, wenn mindestens zehn, vorzugsweise mindestens 20, besonders bevorzugt mindestens 50, noch weiter bevorzugt mindestens 100 oder mindestens 500 oder mindestens 1000 Gasaustrittsöffnungen an unterschiedlichen Umfangspositionen dank der Umfangserstreckung des Dorns angeordnet sind.

Besonders gute Luftkisseneigenschaften werden erreicht, wenn in zumindest einem Flächenabschnitt des Dorns mindestens 5, vorzugsweise mindestens 10, bevorzugt mindestens 15, weiter bevorzugt mindestens 20, noch weiter bevorzugt mindestens 50, 100, 150, 200, 1000, 2000 oder 5000 Gasaustrittsöffnungen pro cm² Dornoberfläche vorgesehen sind.

Ganz besonders bevorzugt ist es, wenn es sich bei den Schweißmitteln um Schweißmittel handelt, die mindestens ein in einer Längsnut des Dorns aufgenommenes Schweißband umfassen, das sich zusammen mit dem Substrat bewegt. Bevorzugt wird ein Schweißbereich des Substrates sandwichartig zwischen diesem, sogenannten inneren Schweißband und einem von radial außen wirkenden Schweißband aufgenommen, wobei die Erwärmung beispielsweise mittels einer Hochfrequenzquelle (HF-Quelle) erfolgt. Bei Bedarf kann zusätzlich oder alternativ zu einer außerhalb des Dorns angeordneten HF-Quelle eine zusätzliche HF-Quelle innerhalb des Dorns vorgesehen sein.

Besonders zweckmäßig ist eine Ausführungsvariante, bei der mindestens ein Gasabführungskanal vorgesehen ist, mit dem das durch die Gasaustrittsöffnungen austretende Gas, insbesondere Luft, insbesondere in axialer Richtung, abgeführt werden kann, bevorzugt um eine ungewolltes Aufblähen der verschweißten Rohrform zu vermeiden. Eine Möglichkeit besteht darin, am Außenumfang des Dorns mindestens eine, vorzugsweise in axialer Richtung verlaufende Nut (Gasabführnut) vorzusehen, in der das Gas abtransportierbar ist, d.h. abschäumen kann.

Bevorzugt sind mehrere solcher Nuten, insbesondere mehrere in Umfangsrichtung beabstandete Nuten vorgesehen. Zusätzlich oder alternativ zu dem Vorsehen von Nuten in der Dornaußenoberfläche ist es möglich, im Dorn mindestens eine Luftabführöffnung, vorzugsweise mehrere Luftabführöffnungen vorzusehen, die zu mindestens einen Gasabführkanal im Inneren des Dorns führen, so dass das durch die Gasaustrittsöffnungen austretende Gas über diese Abführöffnungen in den Abführkanal im Inneren des Dorns strömen kann und dort im Inneren, vorzugsweise in axialer Richtung abgeführt werden kann.

Ganz besonders bevorzugt ist es, wenn dem Dorn bzw. den Gasaustrittsöffnungen eine Temperiereinrichtung zugeordnet ist, mit der das unter Druck stehende Gas, insbesondere Druckluft, mit welchem die Gasaustrittsöffnungen aus dem Dorninneren her beaufschlagt werden, definiert, d.h. auf eine vorgebbare oder vorgegebene Temperatur oder einen vorgebbaren oder einen vorgegebenen Temperaturbereich, insbesondere geregelt, einstellbar ist.

Besonders zweckmäßig ist es, wenn das Gas mit Hilfe der Temperiermittel auf eine Temperatur erhitzbar ist, bei der Spannungen in der vorzugsweise schon verschweißten Rohrform reduziert werden. Hierzu sollte die Gastemperatur vorzugsweise über 80°C liegen, jedoch sollte der Schmelzpunkt des Substratmaterials, insbesondere deutlich, unterschritten werden. Eine bevorzugte Temperaturspanne, auf die das Druckgas erhitzbar ist, liegt zwischen 80°C und 120°C. Durch das vorerwähnte Erhitzen werden, insbesondere vom Schweißprozess herrührende, Materialspannungen reduziert und dadurch die Rundheit des Rohrkörpers verbessert. Bevorzugt kann hierzu erhitzte Luft auf axialer Höhe der Schweißmittel und/oder den Schweißmitteln nachgelagert durch entsprechende Gasaustrittsöffnungen im Dorn austreten. Bevorzugt wird die Rohrform großflächig, insbesondere vollumfänglich erhitzt, was durch das Vorsehen der Vielzahl von Gasaustrittsöffnungen gewährleistet werden kann.

Zusätzlich oder alternativ können die Temperiermittel zum Kühlen von Druckgas vorgesehen sein, beispielsweise um ein zügiges Erkalten des Schweißbereichs oder der zuvor großflächig erhitzten Rohrform zu erreichen oder zum Fixieren einer speziell geformten Rohrform.

Ganz besonders bevorzugt ist es, wenn der Dorn mindestens zwei, vorzugsweise gegeneinander abgedichtete Axialabschnitte (Kammern) aufweist, die jeweils, insbesondere unabhängig voneinander, mit einem Druckgasvolumenstrom beaufschlagbar sind, wobei die Temperatur zumindest eines der Gasvolumenströme mit Temperiermitteln einstellbar ist, vorzugsweise derart, dass in einen ersten Axialabschnitt (erste Kammer) erhitzte Luft, vorzugsweise aus einem Temperaturbereich zwischen 80°C und 120°C, durch Gasaustrittsöffnungen austreten kann. Bevorzugt kann durch in einem zweiten Axialabschnitt (zweite Kammer) des Dorns vorgesehene Gasaustrittsöffnungen kühleres Gas austreten, mit dem Ziel ein Abkühlen der Rohrform zu bewirken, insbesondere einer mit Hilfe der Schweißmittel hergestellten Schweißnaht und/oder der gegebenenfalls zuvor im ersten Axialabschnitt großflächig erhitzten Rohrform. Bei dem kühlenden Gas kann es sich beispielsweise um auf Raumtemperatur befindliche Luft handeln oder um mit Hilfe von entsprechenden Temperiermitteln definiert temperierte Luft oder ein anderes Gas. Bevorzugt ist der zweite Axialabschnitt dem ersten Axialabschnitt in Transportrichtung der Rohrform nachgelagert.

Die zuvor beschriebene Weiterbildung der Erfindung ist nicht auf zwei Axialabschnitte beschränkt. So können auch mehr als zwei separat mit Druckgas beschickbare Axialabschnitte vorgesehen sein, wobei bevorzugt zumindest einem der Axialabschnitte Temperiermittel zugeordnet sind. Bevorzugt unterscheidet sich die Temperatur von zumindest zwei zu unterschiedlichen Axialabschnitten geleiteten Gasvolumeriströmen.

Die Erfindung führt auch auf ein Verfahren zum Herstellen von Tubenkörpern für Verpackungstuben aus einem, insbesondere als Laminatmaterial ausgebildeten Substrat, welches sich durch eine bevorzugte Dickenerstreckung aus einem Bereich zwischen 75µm und 500µm aufweist. Dieses Substratmaterial erzeugt, insbesondere in einem zu einer Rohrform umgeformten Zustand, unterstützt durch von radial außen auf das Substratmaterial nach radial innen wirkende Anpressmittel eine erhöhte Reibung. Erfindungsgemäß ist nun vorgesehen zur Minimierung dieser Reibung zwischen Dorn und Substratmaterial ein Gaskissen, insbesondere ein Luftkissen zu erzeugen, welches sich vorzugsweise zumindest lokal durch Drücke aus einem Wertebereich zwischen 1 bar und 6bar auszeichnet. Bevorzugt wird hierzu Druckgas, insbesondere Druckluft durch mikroporöses und/oder nanoporöses Dornmaterial in einen Bereich zwischen dem Dorn und dem Substratmaterial gepresst. Insbesondere wird hierzu ein Druckgasvolumenstrom durch die Poren pro cm² Dornoberfläche von etwa 1 cm³ bis 150cm³/min erzeugt. Wesentlich sind bei dem Herstellungsprozess von Tubenkörpern im Gegensatz zu beispielsweise Extrusionsprozessen Anpressmittel, die zum einen einem Aufweiten der Rohrform entgegenwirken und insbesondere ein Schwimmen der Rohrform auf dem Dorn vermeiden, was unterstützt wird durch die Substratbahn klemmenden Schweißbändern, die das Substratmaterial sandwichartig zwischen sich aufnehmen, wobei die Längsrandbereiche des Substratmaterials in einem Bereich zwischen den Schweißbändern entweder überlappen oder auf Stoß aneinander anliegen. Da bei der Tubenkörperherstellung im Gegensatz zu Extrusionsprozessen das Substratmaterial nur im Schweißbereich erhitzt und ansonsten kalt ist, ist das Substrat-material im Vergleich mit fluidem, aufgeschmolzenem Kunststoff, der durch Extrusionsdüsen gepresst wird, vergleichsweise starr. Ein weiterer wesentlicher Unterschied zu Extrusionsprozessen ist, dass der zur Tubenkörperherstellung notwendige Dorn wesentlich weniger rotationssymmetrisch ist, als die in Extrusionsprozessen zum Einssatz kommenden Dorne, was beispielsweise bereits durch das Vorsehen der Schweißbänder notwendig ist, wobei vorzugsweise zumindest ein inneres Schweißband in einer Längsnut des Dorns verläuft.

Weitere Vorteile, Merkmale und Einzelheiten der Erfindung gehen aus der nachfolgenden Beschreibung bevorzugter Ausführungsbeispiele sowie anhand der Zeichnungen. Diese zeigen in:
- Fig. 1: eine Draufsicht auf eine Vorrichtung zur Herstellung von Tubenkörpern in einer schematischen Darstellung,
- Fig. 2: einen, zumindest abschnittsweise, aus einem mikroporösen Material ausgebildeten Dorn,
- Fig. 3: eine geschnittene Darstellung eines aus mikroporösem Material ausgebildeten Dorns mit einer diesen umschließenden Rohrform, die von radial außen über ein Formband nach radial innen kraftbeaufschlagt wird,
- Fig. 4: eine Querschnittansicht gemäß Fig. 3, wobei hier konkav ausgeformte Rollen gezeigt sind, mit denen das Formband gemäß Fig. 3 in radialer, Richtung nach innen auf den Rohrkörper gepresst wird, um somit eine ausreichende Haftkraft zwischen Formband und Rohrkörper zu bewirken, mit dem Rohrkörper mit samt dem Formband mit Hilfe der rotierenden Rollen in Richtung der Längserstreckung des Dorns zu transportieren,
- Fig. 5: eine Darstellung von alternativen kombinierten Anpress- und Fördermitteln in Form von unmittelbar den Rohrkörper beaufschlagenden und den Rohrkörper in Richtung der Längserstreckung des Dorns mitnehmenden Transportbändern, die radial außerhalb eines abgeflachten Bereichs des Dorns angeordnet sind,
- Fig. 6: eine alternative Schnittdarstellung eines Dorns mit nur teilweise dargestellter Längsnut, in welcher ein Schweißband von Schweißmitteln angeordnet ist,
- Fig. 7: eine Querschnittsansicht durch den Dorn gemäß Fig. 6 in der Höhe der Längsnut, wobei radial außerhalb der Längsnut eine Energiequelle, hier eine HF-Quelle zum Erhitzen eines Schweißbereichs angeordnet ist,
- Fig. 8: eine schematische Schnittdarstellung eines in zwei Axialabschnitte unterteilten Dorns, die unabhängig voneinander mit jeweils einem Gasvolumenstrom beaufschlagbar sind, wobei die Temperatur zumindest eines der Gasvolumenströme, vorzugsweise geregelt, einstellbar ist,
- Fig. 9: eine schematische Seitenansicht eines Dorns mit einer Beschichtung aus die Gasaustrittsöffnungen bildenden porösen, vorzugsweise geschäumten Material, wobei in der Dornoberfläche mehrere, gleichmäßig in Umfangsrichtung beabstandtete, als Gasabführnuten ausgebildete Gasabführkanäle vorgesehen sind,
- Fig. 10: eine stark schematisierte Längs-Schnittansicht einer möglichen Dornausführungsvariante, bei der durch die Poren von porösem Material austretendes Gas über größere Abführöffnungen radial nach innen in den Dorn und dort in einem inneren Gasabführkanal in axialer Richtung abströmen kann, und

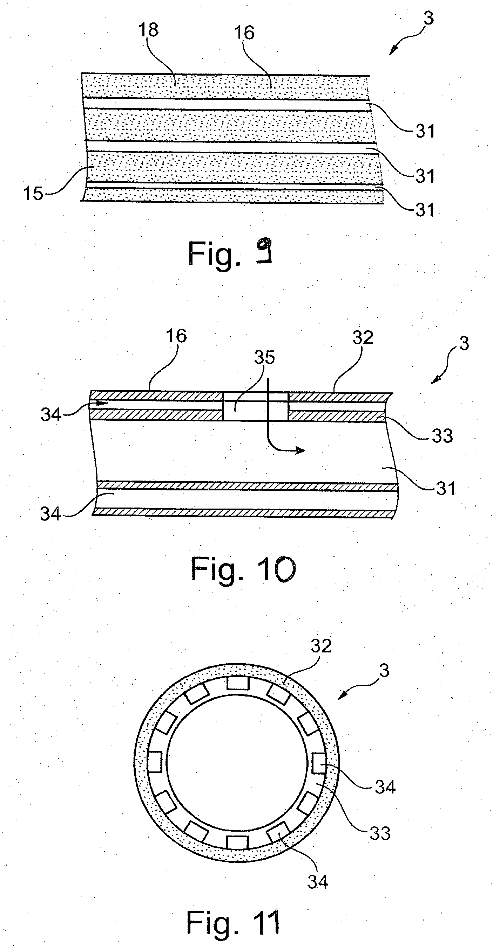

- Fig. 11: eine Querschnittansicht durch eine mögliche Ausführungsvariante eines Dorns, bei welchem eine Beschichtung aus einem porösen, insbesondere geschäumten Material, beispielsweise mit Metall oder Keramik auf einer Trägerkonstruktion vorgesehen ist, wobei die Trägerkonstruktion eine Vielzahl von in Umfangsrichtung nebeneinander angeordneten und in axialer Richtung verlaufenden Zuführnuten für Druckgas aufweist, die eine zumindest näherungsweise gleichförmige Verteilung des Gasstroms sicherstellen. Bei Bedarf kann die gezeigte Ausführungsvariante mit einer Abführöffnung zum Abführen von Gas im Inneren des Dorns kombiniert werden und/oder mit am Außenumfang vorgesehenen Gasabführkanälen beispielsweise in Form von Gasabführnuten.

In den Figuren sind gleiche Elemente und Elemente mit der gleichen Funktion und mit den gleichen Bezugszeichen gekennzeichnet.

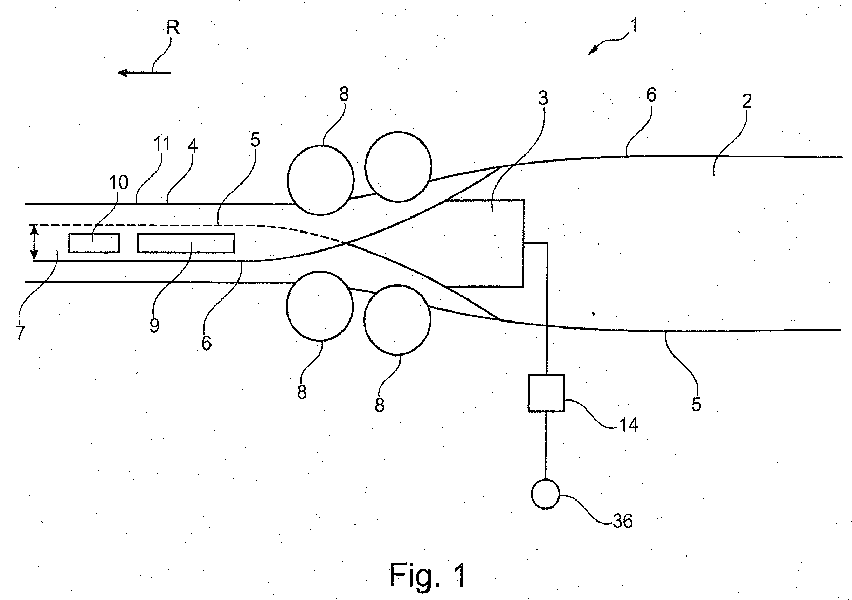

In Fig. 1 ist in einer Draufsicht eine Vorrichtung 1 zum Herstellen von Tubenrohren für Verpackungstuben gezeigt. Mit dem gezeigten Abschnitt der Vorrichtung wird ein flaches, zunächst bahnförmiges, beispielsweise ein- oder mehrschichtiges, Substrat 2 um einen, hier zylindrischen, Dorn 3 in eine Rohrform 4 geformt, die einen zwischen zwei Längskanten 5, 6 ausgebildeten Überlappungsbereich 7 aufweist, welcher von zwei Längsrandbereichen des Substrates 2 gebildet ist. In einem in Transportrichtung R weiter hinter gelegenen Bereich wird das geformte Rohr in Tubenrohre gewünschter Länge abgelängt (nicht dargestellt).

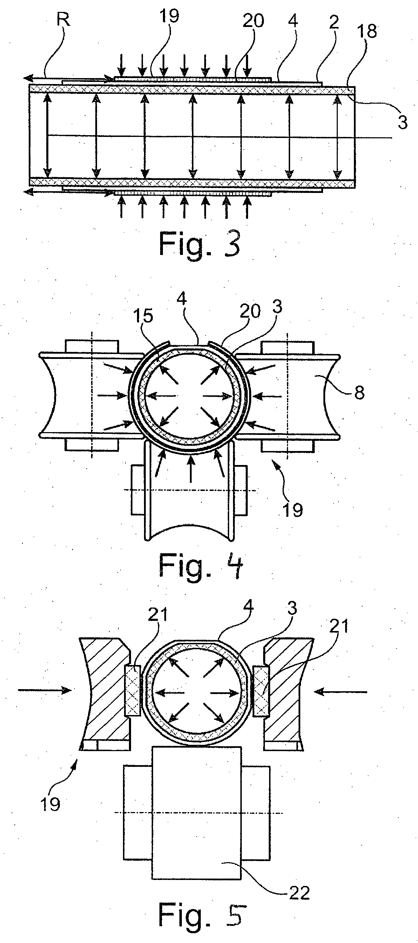

Dem Substrat 2 sind nicht dargestellte Transportrollen zugeordnet, mit denen das Substrat 2 in Richtung Dorn 3 in die Transportrichtung R transportiert wird. Das Umformen erfolgt mit Hilfe von konkav konturierten Rollen 8 (kombinierte Anpress- und Fördermittel 19), die das Substrat aus der flachen Bahnform in die Rohrform 4 umformen, welche den Dorn 3 eng umschließt und entlang von diesem in die Transportrichtung R weiter zu der zuvor erwähnten, nicht dargestellten Schneideinrichtung transportiert wird. Die Rollen 8 können wie dargestellt unmittelbar auf die Rohrform einwirken oder über mindestens ein aus Übersichtlichkeitsgründen nicht dargestelltes, beispielsweise in den Fig. 3 und 4 gezeigtes Formband. Wesentlich ist, dass das Substrat nach radial innen gepresst wird in Richtung Dorn 3 um ein Schwimmen des Substrates und der daraus gebildeten Rohrform auf dem Dorn zu vermeiden.

In Transportrichtung R hinter den Rollen 8 befinden sich Schweißmittel 9, beispielsweise eine Hochfrequenzschweißeinrichtung, zum Verschweißen des Überlappungsbereichs 7, genauer zum Verschweißen der übereinanderliegenden Längsrandbereiche des Substrates 2 bzw. der Rohrform 4. In Transportrichtung R dahinter befinden sich Anpressmittel 10 zum Verfestigen bzw. Pressen der mit Hilfe der Schweißmittel 9 erzeugten Schweißnaht 11.

In Transportrichtung hinter den Anpressmitteln 10 befinden sich im Stand der Technik nicht dargestellte Kühlmittel zum Abkühlen der vom Schweißprozess heißen Schweißnaht, wobei auf die Kühlmittel in Weiterbildung der Erfindung bevorzugt verzichtet wird, da die Kühlfunktion von durch später noch zu erläuterte Gasaustrittsöffnungen austretendes Druckgas übernommen werden kann.

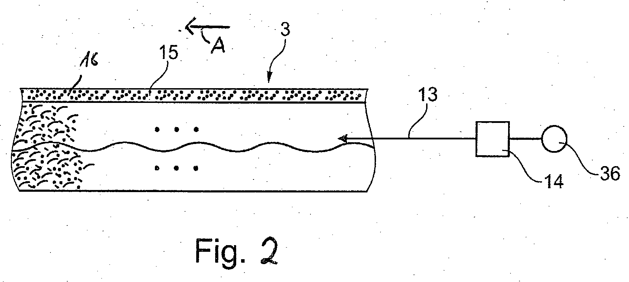

Zur Reduzierung der Reibung zwischen dem Substrat 2, genauer der Rohrform 4 und dem Dorn 3, ist der Dorn 3 mit einer Vielzahl von in Fig. 1 nicht gezeigten Gasaustrittsöffnungen versehen, durch die von radial innen nach radial außen ein Gas, insbesondere Druckluft ausgeblasen kann, um ein, vorzugsweise gleichförmiges Luftpolster zwischen dem Substrat 2, genauer der Rohrform 4 und dem Dorn 3 auszubilden. Unterschiedliche Ausgestaltungsvarianten der Gasaustrittsöffnungen ergeben sich beispielhaft anhand der Fig. 2 und 3.

Aus Fig. 1 ist zu entnehmen, dass dem Dorn Druckgas über eine Druckgasleitung zugeführt wird - dieses Druckgas tritt zur Ausbildung eines Gaspolsters aus den in der Dornoberfläche befindlichen Gasaustrittsöffnung aus. Das Druckgas wird von einer Druckgasquelle 36 über Temperiermittel 14 zum Dorninneren geleitet.

In Fig. 3 ist ein Ausschnitt eines Dorns 3 für eine Vorrichtung 1 gemäß Fig. 1 gezeigt, wobei der Dorn 3 im oberen Bereich geschnitten dargestellt ist. Die mit dem Bezugszeichen 13 gekennzeichnete Pfeilrichtung 13 symbolisiert die Gaszufuhr, hier die Druckluftzufuhr im Inneren des Dorns 3, wobei die Druckluft durch Temperiermittel 14 gefördert, die in dem gezeigten Ausführungsbeispiel als Durchlauferhitzer ausgebildet sind, wobei Druckluft alternativ auch aus beheizten Druckluftbehältern gefördert werden kann. Die als Heizmittel ausgebildeten Temperiermittel 14 erhitzen die Druckluft auf eine bevorzugte Temperatur aus einem Wertebereich zwischen 80°C und 120°C, um Spannungen im Substratmaterial abzubauen und dadurch die Rundheit der Rohrform zu verbessern

Bei dem Ausführungsbeispiel gemäß Fig. 2 sind sowohl eine Vielzahl von Gasaustrittsöffnungen 15 in eine mit der Transportrichtung eher zusammenfallende Axialrichtung A hintereinander, als auch in Umfangsrichtung nebeneinander angeordnet, wobei die Gasaustrittsöffnungen 15 unmittelbar in der als Zylindermantelfläche ausgebildete gekrümmte Dornoberfläche 16 des Dorns 3 und nicht radial innen versetzt zu dieser angeordnet sind.

Bei dem Ausführungsbeispiel gemäß Fig. 2 ist der Dorn zumindest abschnittsweise aus einem porösen Material 18 (z.B. poliertem Metallschaum) ausgebildet, das eine Vielzahl von Mikroporen ausgebildeten Gasaustrittsöffnungen 15 aufweist, die sowohl Axial, als auch in Umfangsrichtung nebeneinander angeordnet sind, derart um somit die Ausbildung eines Luftkissens sicherzustellen. Auch bei dem Ausführungsbeispiel gemäß Fig. 2 wird die Druckluft durch fakultative Heizmittel 14 geleitet.

In Fig. 3 ist in einer alternativen Darstellung eine Längsschnittansicht eines Dorns 3 gezeigt. Dieser ist innen hohl und mit Druckgas, insbesondere Druckluft beaufschlagbar, wobei das Druckgas durch mikroporöses Dornmaterial 18 in radialer Richtung nach außen wandert. Bevorzugt handelt es sich bei dem mikroporösen Material um einen Metallschaum, beispielsweise einen Aluminiumschaum, der ggf. mit Stabilisierungszusätzen versehen ist. Mit Hilfe des Druckgases wird zwischen der aus einem Substrat 2 gebildeten Rohrform 4 und dem Dorn 3 ein Luftkissen ausgebildet. Die Rohrform 4 wird in der Transportrichtung R mit Hilfe von kombinierten Anpress- und Fördermitteln 19 transportiert, die in dem gezeigten Ausführungsbeispiel ein Formband 20 umfassen, welches nach radial innen gegen die Rohrform 4 gepresst wird, um somit eine Haftreibung zwischen dem Formband 20 und der flexiblen Rohrform 4 zu erzeugen, so dass die Rohrform 4 von dem Formband 20 in der axialen Transportrichtung R mitgenommen wird.

In dem gezeigten Ausführungsbeispiel ist das poröse Material 18 selbsttragend ausgebildet, d.h. weist keine zusätzliche Stützstruktur auf. Bei einer alternativen, nicht dargestellten Ausführungsvariante ist das mikroporöse Material 18 auf einer Stützstruktur aufgebracht, die beispielsweise von einem zylindrischen Lochblech gebildet ist.

Anstelle des mikroporösen Materials 18 kann, zumindest abschnittsweise, ein nanoporöses Material vorgesehen werden. Auch ist es denkbar nanoporöses Material auf mikroporösem Material vorzusehen, so dass die Porengröße des Dornmaterials insgesamt von radial innen nach radial außen abnimmt.

In Fig. 4 ist eine Querschnittsansicht durch Fig. 3 gezeigt, wobei die in Fig. 3 aus Übersichtlichkeitsgründen nicht gezeigten konkaven Rollen 8 dargestellt sind, die von radial außen das Formband 20 der kombinierten Anpress- und Fördermittel 19 kraftbeaufschlagen. Zu erkennen ist ferner der Dorn 3 aus mikroporösem Material, in welchem eine Vielzahl, bevorzugt mehrere tausend Gasaustrittsöffnungen 15 (hier Poren) gebildet sind, durch die Druckgas von radial innen nach radial außen austreten kann um zwischen der Rohrform 4 und dem Dorn 3 ein Luftkissen auszubilden.

Fig. 5 zeigt in einer Querschnittsansicht alternativ ausgebildete Anpress- und Formschlussmittel 19. Diese umfassen in dem gezeigten Ausführungsbeispiel zwei parallel angeordnete Transportbänder 21, die angetrieben sind und die wiederum aufgrund der Reibungswirkung die Rohrform 4 in die Transportrichtung, d.h. in die Zeichnungsebene hinein transportieren. Die Transportbänder 21 werden in radialer Richtung nach innen gedrückt, um für die notwendige Haftreibung zu sorgen. Zusätzlich zu den zwei Transportbändern 21 ist eine Stützrolle 22 vorgesehen, die die Rohrform 4 in einem unteren Bereich stützt. Die Stützrolle 22 kann auch als Antriebsrolle ausgebildet sein.

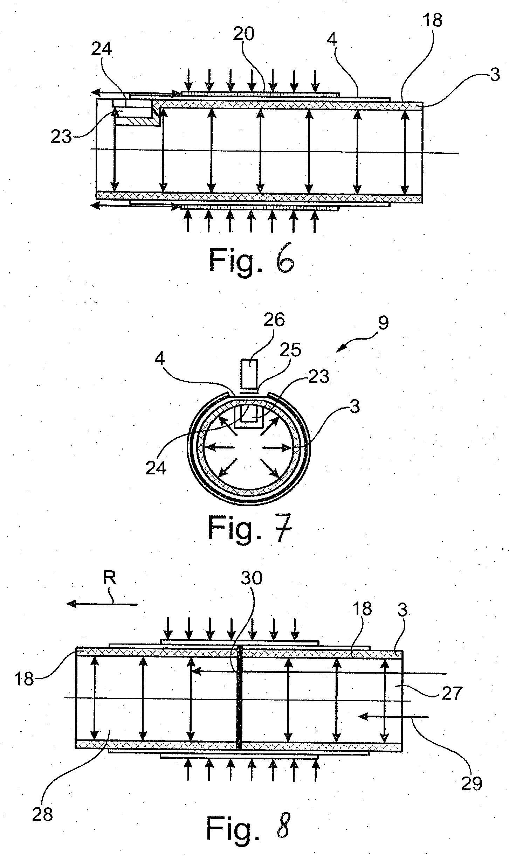

Fig. 6 zeigt einen Dorn aus porösem Material 18, wobei im Dorn eine nur ausschnittsweise dargestellte Längsnut 23 vorgesehen ist, in welcher ein (inneres) Schweißband 24 angeordnet ist, welches im Betrieb radial innen an der Rohrform, insbesondere in einem Überlappungsbereich 7, anliegt, wobei die Rohrform von dem inneren Schweißband 24 und einem weiteren, nicht dargestellten äußeren Schweißband (vgl. Fig. 7) sandwichartig aufgenommen und dann mit Schweißenergie, beispielsweise Hochfreqüenzstrahlung beaufschlagt wird.

Fig. 7 zeigt eine Querschnittsansicht durch den Dorn 3 auf Höhe der Längsnut 23 mit dem darin angeordneten (inneren) Schweißband 24. Parallel zu diesem mit der Rohrform mitlaufenden inneren Schweißband 24 ist ein äußeres Schweißband 25 vorgesehen, wobei die beiden Schweißbänder 24, 25 die Rohrform 4 in einem Schweißbereich sandwichartig zwischen sich aufnehmen.

Eingezeichnet ist ferner außerhalb des äußeren Schweißbandes 25 eine HF-Quelle 26 der Schweißmittel 9.

In Fig. 8 ist eine weitere alternative Ausgestaltung des Dorns 3 in einer Längsschnittansicht gezeigt. Dabei ist der Dorn in zwei Axialabschnitte, nämlich einem ersten Axialabschnitt 27 und einem zweiten Axialabschnitt 28 aufgeteilt, die gegeneinander abgedichtet sind, so dass die jeweils aus porösem Material 18 ausgebildeten Axialabschnitte separat mit jeweils einem Druckgasvolumenstrom beaufschlagbar sind. Der erste Gasvolumenstrom zur Beaufschlagung des ersten Axialabschnittes ist mit dem Bezugszeichen 29 gekennzeichnet und lediglich schematisch als Pfeil dargestellt. Der zweite Gasvolumenstrom ist mit dem Bezugszeichen 30 gekennzeichnet und beispielsweise über eine Rohrleitung zu dem zweiten Axialabschnitt 28, insbesondere im inneren des Dorns 3 geführt.

Ganz besonders bevorzugt ist es, wenn die beiden Gasvolumenströme 29, 30 eine voneinander unterschiedliche Temperatur aufweisen, wobei es noch weiter bevorzugt ist, wenn der in der Transportrichtung R vor dem zweiten Axialabschnitt angeordnete erste Axialabschnitt 27 mit einem eine erste, höhere Temperatur aufweisenden Gas, insbesondere Druckmittel, beaufschlagt wird als der zweite Gasvolumenstrom, um zwei unterschiedlich temperierte Luftkissen zu erzeugen, wobei mit dem ersten Luftkissen radial außerhalb des ersten Axialabschnitts die Rohrform 4 erwärmt wird, vorzugsweise auf eine Temperatur aus einem Temperaturbereich zwischen etwa 80° C und etwa 120°C, um somit Spannungen aus dem Material zu nehmen, wobei mit dem zweiten, axial benachbarten Luftkissen bevorzugt die Rohrform 4 abgekühlt wird. Die Temperierung des ersten Gasvolumenstroms erfolgt mit Hilfe nicht dargestellter, beispielsweise einen Wärmetauscher umfassenden Temperiermitteln.

In Fig. 9 ist ein Abschnitt eines Dorns 3 von außen gezeigt. Zu erkennen ist, dass die konvex gekrümmte Dornoberfläche 16 aus einem porösen Material 18, insbesondere ein Metallschaum, ein Keramikschaum oder ein Kunststoffschaum, beispielsweise ein Polyurethanschaum ausgebildet ist. In der Oberfläche sind mehrere, vorzugsweise gleichmäßig in Umfangsrichtung beabstandete Gasabführkanäle 31 in Form von axialen Nuten (Gasabführnuten) vorgesehen. Durch diese Gasabführkanale 31 kann das durch die als Poren ausgebildeten Gasaustrittsöffnungen 15 austretende Druckgas in radialer Richtung abströmen, wodurch ein ungewolltes aufblähen der Rohrform vermieden wird.

Fig. 10 zeigt in einer stark schematisierten Ansicht eine alternative Ausführungsvariante eines Dorns 3 in Längsschnittansicht. Zu erkennen ist eine äußere Beschichtung 32 aus einem porösen Material 16.

Diese poröse Beschichtung 32 mit ihren von den Poren gebildeten Gasaustrittsöffnungen wird getragen von einer Trägerstruktur 33, in welcher mehrere in Umfangsrichtung beabstandete Gaszuführkanäle 34 vorgesehen sind, die das zuströmende Druckgas gleichmäßig verteilen. Im Inneren des Dorns 3 ist ein Gasabführkanal 31 realisiert, der mit einem Bereich zwischen Rohrform und Dornoberfläche 16 über mindestens eine sich radial erstreckende Abführöffnung 35 verbunden ist, über die überschüssiges Druckgas nach innen in den Gasabführkanal 31 und in diesem axial abströmen kann.

In Fig. 11 ist schematisch eine Querschnittansicht einer alternativen Dornausführungsvariante gezeigt. Zu erkennen ist eine Beschichtung 32 aus porösem Material, die die Gasaustrittsöffnungen in Form von Poren bildet. Die Beschichtung 32 kann einschichtig ausgebildet sein, beispielsweise aus mikroporösem oder nanoporösem Material oder mehrschichtig, beispielsweise in dem auf einer mikroporösen inneren Schicht eine nanoporöse äußere Schicht aufgebracht bzw. vorgesehen ist. In dem gezeigten Ausführungsbeispiel beträgt die Gesamtdickenerstreckung der Beschichtung 32 2mm. Die Beschichtung 32 wird getragen von einer Trägerstruktur 33, die eine Vielzahl von als Längsnuten ausgebildete Gaszuführkanäle 34 aufweist, die für eine gleichmäßige Luftverteilung Sorge tragen. Bei Bedarf kann der innere Bereich, d.h. der Bereich innerhalb der Trägerstruktur 33 als Gasabführkanal genutzt werden, in welchen Luft über mindestens eine Abführöffnung von der Dornoberfläche 16 zugeführt wird.

### Bezugszeichenliste

- 1: Vorrichtung
- 2: Substrat
- 3: Dorn
- 4: Rohrform
- 5: Längskanten
- 6: Längskanten
- 7: Überlappungsbereich
- 8: Rollen
- 9: Schweißmittel
- 10: Anpressmittel
- 11: Schweißnaht
- 13: Pfeilrichtung
- 14: Temperiermittel
- 15: Gasaustrittsöffnungen
- 16: Dornoberfläche
- 18: poröses Material
- 19: kombinierte Anpress- und Fördermittel
- 20: Formband
- 21: Transportbänder
- 22: Stützrolle
- 23: Längsnut
- 24: (inneres) Schweißband
- 25: (äußeres) Schweißband
- 26: HF-Quelle
- 27: erster Axialabschnitt
- 28: zweiter Axialabschnitt
- 29: erste Gasvolumenstrom
- 30: zweiter Gasvolumenstrom
- 31: Gasabführkanal
- 32: Beschichtung
- 33: Trägerstruktur
- 34: Gaszuführkanal
- 35: Abführöffnung
- 36: Gasdruckquelle
- A: Axialrichtung
- R: Transportrichtung

## Patentansprüche

1. Vorrichtung zum Herstellen von Tubenkörpern für Verpackungstuben, umfassend einen sich in eine Axialrichtung erstreckenden, langgestreckten Dorn (3), um welchen eine Substratbahn zur Herstellung einer Rohrform (4) umformbar ist, wobei in dem Dorn (3) mehrere mit Druckgas beaufschlagbare Gasaustrittsöffnungen (15) zur Erzeugung eines Gaskissens, insbesondere Luftkissen, zwischen dem Dorn (3) und der Rohrform (4) vorgesehen sind, und wobei Schweißmittel zum Verschweißen der Rohrform vorgesehen sind, und wobei die Rohrform (4) mit Hilfe von radial benachbart zum Dorn (3) angeordneten, kombinierten Anpress- und Fördermitteln (19) radial nach innen in Richtung auf eine in Umfangsrichtung konvex gekrümmte Dornoberfläche (16) des Dorns (3) pressbar und aufgrund einer Reibwirkung zwischen den Mitteln und der Rohrform (4) in Richtung der Längsrichtung des Dorns (3) transportierbar ist,
**dadurch gekennzeichnet,**
**dass** die gekrümmte Dornoberfläche, zumindest abschnittsweise, von die Gasaustrittsöffnungen in Form von Poren aufweisendem mikroporösem und/oder nanoporösem Material gebildet ist, und dass die Gasaustrittsöffnungen derart angeordnet sind, dass das erzeugte Gaskissen dem Anpressdruck der kombinierten Anpress- und Fördermittel entgegenwirkt.

2. Vorrichtung nach Anspruch 1,
**dadurch gekennzeichnet,**
**dass** mindestens 10, 20, 50, 100, 150, 200, 500, 1000, 2000 oder mindestens 5000 Gasaustrittsöffnungen (15) an unterschiedlichen Axialpositionen entlang der Axialerstreckung des Dorns (3) angeordnet sind und/oder dass mindestens 10, 20, 50, 100, 500, 1000 oder mindestens 2000 Gasaustrittsöffnungen (15) an unterschiedlichen Umfangspositionen entlang der Umfangsstreckung des Dorns (3) angeordnet sind.

3. Vorrichtung nach einem der vorhergehenden Ansprüche,
**dadurch gekennzeichnet,**
**dass** in zumindest einem Flächenabschnitt mindestens 5, 10, 15, 20, 30, 50 oder mindestens 100 Gasaustrittsöffnungen (15) pro cm² Dornoberfläche vorgesehen sind.

4. Vorrichtung nach einem der vorhergehenden Ansprüche,
**dadurch gekennzeichnet,**
**dass** zumindest ein Teil der Gasaustrittsöffnungen (15), vorzugsweise die meisten der Gasaustrittsöffnungen (15), bevorzugt sämtliche Gasaustrittsöffnungen (15) in einer Zylindermantelfläche des Dorns (3) vorgesehen sind.

5. Vorrichtung nach einem der vorhergehenden Ansprüche,
**dadurch gekennzeichnet,**
**dass** in dem Dorn (3) eine Längsnut angeordnet ist, in welcher ein Schweißband, der vorzugsweise als HF-Schweißeinrichtung ausgebildeten Schweißmittel aufgenommen ist.

6. Vorrichtung nach einem der vorhergehenden Ansprüche,
**dadurch gekennzeichnet,**
**dass** das poröse Material (18) ein Sintermaterial, oder ein durch thermisches Spritzen hergestelltes Material, oder einen Metallschaum, oder einem Kunststoffschaum, insbesondere aus Polyurethan, oder ein Keramikschaum umfasst oder ist.

7. Vorrichtung nach einem der vorhergehenden Ansprüche,
**dadurch gekennzeichnet,**
**dass** die mittlere Porengröße aus einem Wertebereich zwischen 0,05µm und 2,0mm, vorzugsweise zwischen 0,1µm und 1,0mm gewählt ist, und/oder im Falle des Einsatzes von nanoporösem Material aus einem Wertebereich zwischen 1nm und 100 nm gewählt ist.

8. Vorrichtung nach einem der vorhergehenden Ansprüche,
**dadurch gekennzeichnet,**
**dass** Temperiermittel (14) zum definierten Erhitzen und/oder Kühlen des Gases, insbesondere der Druckluft, vorgesehen sind.

9. Vorrichtung nach Anspruch 8,
**dadurch gekennzeichnet,**
**dass** die Gastemperatur mit Hilfe der Temperiermittel (14) auf eine Temperatur, insbesondere aus einem Temperaturbereich zwischen 80°C und 120°C, bevorzugt geregelt, einstellbar ist, bei welcher Materialspannungen der Rohrform reduziert werden.

10. Vorrichtung nach einem der Ansprüche 8 oder 9,
**dadurch gekennzeichnet,**
**dass** der Dorn (3) einen Gasaustrittsöffnungen (15) aufweisenden ersten Axialabschnitt (27) aufweist, der mit einem eine über die Temperiermittel (14) einstellbaren erste Temperatur aufweisenden Gasvolumenstrom (29) beaufschlagbar ist und einen zweiten Axialabschnitt (28), der mit einem zweiten, eine, gegebenenfalls über Temperiermittel einstellbare, zweite, vorzugsweise von der ersten Temperatur unterschiedliche, Temperatur aufweisenden Gasvolumenstrom (30) beaufschlagbar ist.

11. Vorrichtung nach Anspruch 10,
**dadurch gekennzeichnet,**
**dass** der erste Axialabschnitt (27) in Transportrichtung der Rohrform (4) vor dem zweiten Axialabschnitt (28) angeordnet ist, und dass die zweite Temperatur niedriger ist als die erste Temperatur, vorzugsweise um mindestens 10°C, noch weiter bevorzugt um mindestens 20°C, noch weiter bevorzugt um mindestens 30°C oder 40°C niedriger ist, als die erste Temperatur, und bevorzugt aus einem Temperaturbereich zwischen 10°C und 75°C gewählt ist.

12. Verfahren zum Herstellen von Tubenkörpern für Verpackungstuben, insbesondere zum Betreiben einer Vorrichtung (1) nach einem der vorhergehenden Ansprüche, wobei eine, vorzugsweise als mehrlagige Laminatbahn ausgebildete Substratbahn um einen sich in einer Axialrichtung erstreckenden, langgestreckten Dorn (3) zu einer Rohrform umgeformt wird, wobei und die Rohrform verschweißt und nach radial innen in Richtung auf eine in Umfangsrichtung konvex gekrümmte Dornoberfläche des Dorns gepresst und in Richtung der Längserstreckung des Dorns transportiert wird, und wobei zwischen dem Dorn (3) und der Rohrform (4) ein Gaskissen mit Hilfe von Druckgas erzeugt wird,
**dadurch gekennzeichnet,**
**dass** zum Erzeugen des Gaskissens das Druckgas durch von Poren gebildeten Gasaustrittsöffnungen in einem die gekrümmte Dornoberfläche zumindest abschnittsweise bildenden mikroporösen und/oder nanoporösen Material gefördert wird, und dass das erzeugte Gaskissen dem Anpressdruck der kombinierten Anpress- und Fördermittel entgegenwirkt.

13. Verfahren nach Anspruch 12,
**dadurch gekennzeichnet,**
**dass** das Gaskissen, zumindest in einem Teilabschnitt, insbesondere nur in mindestens einem Teilabschnitt, mit einer Radialerstreckung zwischen 3µm und 50µm, vorzugsweise zwischen 5µm und 35µm, noch weiter bevorzugt zwischen 5µm und 25µm erzeugt wird.

14. Verfahren nach einem der Ansprüche 12 oder 13,
**dadurch gekennzeichnet,**
**dass** das Druckgas mit einem Volumenstrom zwischen 1 cm³ und 50cm³ pro cm² Dornoberfläche gefördert wird und/oder dass der Druck im Gaskissen zwischen, zumindest in einem Teilabschnitt, etwa 1 bar und 6 bar beträgt.

15. Verfahren nach einem der Ansprüche 12 bis 14,
**dadurch gekennzeichnet,**
**dass** die Rohrform derart nach radial innen pressbar ist und/oder gepresst wird, dass ein in Bezug auf seiner Radialerstreckung inhomogenes Gaskissen erzeugbar ist/erzeugt wird.

## Claims

1. A device for producing tubular structures for packaging tubes, comprising an elongated mandrel (3) extending in an axial direction, around which a substrate web can be shaped to produce a tubular shape (4), wherein a plurality of gas outlet openings (15) to which compressed gas can be applied to generate a gas cushion, in particular an air cushion, between the mandrel (3) and the tubular shape (4) are provided in the mandrel (3), and wherein welding means are provided for welding the tubular shape, and wherein the tubular shape (4) can be pressed radially inwards in the direction of a mandrel surface (16) of the mandrel (3), the surface being convex-curved in the circumferential direction, with the aid of combined pressure-application and conveying means (19) disposed radially adjacent to the mandrel (3) and can be transported in the direction of the longitudinal direction of the mandrel (3) by means of a friction effect between the means and the tubular shape (4),
**characterised in that**
the curved mandrel surface is constituted, at least in sections, by a microporous and/or nanoporous material comprising the gas outlet openings in the form of pores, and that the gas outlet openings are constituted such that the generated gas cushion counteracts the contact pressure of the combined pressure-application and conveying means.

2. The device according to claim 1, **characterised in that** at least 10, 20, 50, 100, 150, 200, 500, 1000, 2000 or at least 5000 gas outlet openings (15) are disposed at different axial positions along the axial extension of the mandrel (3) and/or that at least at least 10, 20, 50, 100, 500, 1000 or at least 2000 gas outlet openings (15) are disposed at different circumferential positions along the circumferential extension of the mandrel (3).

3. The device according to any one of the preceding claims, **characterised in that**, in at least one surface section, at least 5, 10, 15, 20, 30, 50 or at least 100 gas outlet openings (15) are provided per cm² of mandrel surface.

4. The device according to any one of the preceding claims, **characterised in that** at least some of the gas outlet openings (15), preferably most of the gas openings (15), preferably all of the gas outlet openings (15) are provided in a lateral cylindrical surface of the mandrel (3).

5. The device according to any one of the preceding claims, **characterised in that** there is disposed in the mandrel (3) a longitudinal groove, in which a welding strip, the welding means preferably constituted as an HF welding device, is accommodated.

6. The device according to any one of the preceding claims, **characterised in that** the porous material (18) comprises or is a sintered material, or a material produced by thermal spraying, or a metal foam, or a plastic foam, in particular of polyurethane, or a ceramic foam.

7. The device according to any one of the preceding claims, **characterised in that** the average pore size is selected from a value range between 0.05 µm and 2 mm, preferably between 0.1 µm and 1.0 mm and/or, in the case of the use of nanoporous material, is selected from a value range between 1 nm and 100 nm.

8. The device according to any one of the preceding claims, **characterised in that** temperature-control means (14) are provided for the defined heating and/or cooling of the gas, in particular the compressed air.

9. The device according to claim 8, **characterised in that** the gas temperature can be adjusted, preferably regulated, with the aid of the temperature-control means (14) to a temperature, in particular from a temperature range between 80°C and 120°C, at which material stresses of the tubular shape are reduced.

10. The device according to any one of claims 8 or 9, **characterised in that** the mandrel (3) comprises a first axial section (27) comprising gas outlet openings (15), to which a gas volume flow (29) having a first temperature adjustable by means of the temperature-control means (14) can be applied, and a second axial section (28), to which a second gas volume flow (30) having a second temperature preferably different from the first temperature and adjustable if need be by means of the temperature-control means can be applied.

11. The device according to claim 10, **characterised in that** the first axial section (27) is disposed upstream of the second axial section (28) in the transport direction of the tubular casing (4), and that the second temperature is lower than the first temperature, preferably is lower by at least 10°C, still more preferably by at least 20°C, still more preferably by at least 30°C or 40°C than the first temperature, and is preferably selected from a temperature range between 10°C and 75°C.

12. A method for producing tubular structures for packaging tubes, in particular for operating a device (1) according to any one of the preceding claims, wherein a substrate web, preferably constituted as a multi-layered laminate web, is shaped around an elongated mandrel (3) extending in an axial direction to form a tubular shape, wherein the tubular shape is welded and pressed radially inwards in the direction of a mandrel surface of the mandrel, the surface being convex-curved in the circumferential direction, and is transported in the direction of the longitudinal direction of the mandrel, and wherein a gas cushion is generated with the aid of compressed gas between the mandrel (3) and the tubular shape (4),
**characterised in that**,
in order to generate the gas cushion, the compressed gas is conveyed through gas outlet openings constituted by pores in a microporous and/or nanoporous material forming the curved mandrel surface at least in sections, and that the generated gas cushion counteracts the pressure-application force of the combined pressure-application and conveying means.

13. The method according to claim 12, **characterised in that** the gas cushion, at least in a partial section, in particular only in at least a partial section, is generated with a radial extension between 3 µm and 50 µm, preferably between 5 µm and 35 µm, still more preferably between 5 µm and 25 µm.

14. The method according to any one of claims 12 or 13, **characterised in that** the compressed gas is conveyed with a volume flow between 1 cm³ and 50 cm³ per cm² of mandrel surface and/or that the pressure in the gas cushion amounts, at least in a partial section, to between approx. 1 bar and 6 bar.

15. The method according to any one of claims 12 to 14, **characterised in that** the tubular shape can be pressed radially inwards and/or is pressed radially inwards in such a way that a gas cushion inhomogeneous in respect of its radial extension can be/is generated.

## Revendications

1. Dispositif pour la fabrication de corps de tube pour tubes d'emballage qui comprend un mandrin allongé (3) qui s'étend suivant une direction axiale, autour duquel une bande de substrat est formable pour fabriquer une forme tubulaire (4), le mandrin (3) ayant une pluralité d'ouvertures de sortie de gaz pour la sortie de gaz sous pression (15), de sorte à générer un coussin de gaz, en particulier, des coussins d'air entre le mandrin (3) et la forme tubulaire (4), et des moyens de soudage sont prévus pour le soudage de la forme tubulaire et la forme tubulaire (4) pouvant être pressée radialement vers l'intérieur, vers une surface (16) circonférentielle convexe incurvée de mandrin du mandrin (3) et transportée, à l'aide de moyens combinés de pression et de transport disposés radialement adjacents au mandrin (3) par un effet de friction entre les moyens et la forme tubulaire (4), suivant la direction longitudinale du mandrin (3), **caractérisé en ce**
**que** la surface circonférentielle du mandrin est formée, au moins partiellement, par des ouvertures de sortie de gaz sous forme d'un matériau microporeux et/ou nano poreux qui présente des pores, et en ce que les ouvertures de sortie de gaz sont disposées de telle sorte que le coussin de gaz généré s'oppose à la pression des moyens de pressage et de transport combinés.

2. Dispositif selon la revendication 1, **caractérisé en ce qu'**au moins 10, 20, 50, 100, 150, 200, 500, 1000, 2000 ou, au moins, 5000 ouvertures de sortie de gaz (15) sont disposées à différentes positions axiales, le long de l'extension axiale du mandrin (3) et/ou **en ce qu'**au moins 10, 20, 50, 100, 500, 1000 ou 2000 ouvertures de sortie de gaz (15) sont disposées à différentes positions circonférentielles, le long de l'extension circonférentielle du mandrin (3).

3. Dispositif selon l'une quelconque des revendications précédentes, **caractérisé en ce qu'**au moins 5, 10, 15, 20, 30, 50 ou, au moins, 100 ouvertures de sortie de gaz (15) sont prévues par cm² de surface de mandrin.

4. Dispositif selon l'une quelconque des revendications précédentes, **caractérisé en ce qu'**au moins une partie des ouvertures de sortie de gaz (15), préférablement la plupart des ouvertures de sortie de gaz (15), préférablement toutes les ouvertures de sortie de gaz (15) sont prévues sur une surface cylindrique du mandrin (3).

5. Dispositif selon l'une quelconque des revendications précédentes, **caractérisé en ce qu'**une rainure longitudinale est disposée sur le mandrin (3), dans laquelle une bande de soudage, qui est préférablement formée comme moyen de soudage du dispositif de soudage à HF, est reçue.

6. Dispositif selon l'une quelconque des revendications précédentes, **caractérisé en ce que** le matériau poreux (18) comprend ou est un matériau fritté ou un matériau obtenu par pulvérisation thermique, une mousse métallique, une mousse plastique, notamment, en polyuréthane, ou une mousse céramique.

7. Dispositif selon l'une quelconque des revendications précédentes, **caractérisé en ce que** la dimension moyenne des pores est sélectionnée à partir d'une plage de valeurs comprises entre 0,05 µm et 2,0 mm, préférablement entre 0,1 µm et 1,0 mm, et/ou dans le cas de l'utilisation de matériaux nano poreux, elle est sélectionnée à partir d'une plage de valeurs entre 1 nm et 100 nm.

8. Dispositif selon l'une quelconque des revendications précédentes, **caractérisé en ce que** des moyens de réglage de la température (14) sont prévus pour le chauffage et/ou le refroidissement définis du gaz, en particulier, de l'air comprimé.

9. Dispositif selon la revendication 8, **caractérisé en ce que** la température du gaz est réglable, préférablement elle est réglée en utilisant les moyens de réglage de la température (14) à une température, notamment, à une plage de températures comprises entre 80 °C et 120 °C, à laquelle les tensions du matériau de la forme tubulaire sont réduites.

10. Dispositif selon l'une des revendications 8 ou 9, **caractérisé en ce que** le mandrin (3) présente une ouverture de sortie de gaz (15) ayant une première section axiale (27) qui peut être alimentée par un débit volumique de gaz (29) qui présente une première température réglable par les moyens de réglage de la température (14), et une deuxième section axiale (28) qui peut être alimentée par un deuxième débit volumique de gaz qui présente une deuxième température, préférablement différente de la première, qui est réglable, le cas échéant, par les moyens de réglage de la température (14).

11. Dispositif selon la revendication 10, **caractérisé en ce que** la première section axiale (27) est disposée suivant la direction de transport de la forme tubulaire (4) devant la deuxième section axiale (28), et **en ce que** la deuxième température est inférieure à la première température, préférablement, d'au moins 10 °C, encore plus préférablement d'au moins 20 °C, encore plus préférablement d'au moins 30 °C ou 40 °C inférieure à la première température et, préférablement, elle est sélectionnée à partir d'une plage de températures comprises entre 10 °C et 75 °C.

12. Procédé pour la fabrication de corps tubulaires pour emballer des tubes, en particulier, pour faire fonctionner un dispositif (1) selon l'une quelconque des revendication précédentes, où une bande de substrat, préférablement sous forme d'une bande multicouches de matériau laminé, est déformée autour du mandrin allongé (3) qui s'étend suivant une direction axiale, sous forme tubulaire, où ladite forme tubulaire est soudée et radialement pressée vers l'intérieur, vers une surface circonférentielle convexe incurvée du mandrin et transportée suivant la direction longitudinale du mandrin, et dans lequel entre le mandrin (3) et la forme tubulaire (4) un coussin de gaz est généré à l'aide de gaz sous pression, **caractérisé en ce**
**que** pour produire le coussin de gaz, le gaz sous pression est transporté à travers des ouvertures de sortie de gaz formées par les pores dans un matériau réalisé, au moins par des sections, comme matériau microporeux et/ou nano poreux sur la surface incurvée du mandrin, et en ce que le coussin de gaz généré s'oppose à la pression de contact des moyens de pressage et de transport combinés.

13. Dispositif selon la revendication 12, **caractérisé en ce que** le coussin de gaz, au moins sur une section partielle, en particulier, seulement sur une section partielle, est généré avec une étendue radiale comprise entre 3 µm et 50 µm, préférablement, entre 5 µm et 35 µm, préférablement encore entre 5 µm et 25 µm.

14. Dispositif selon l'une quelconque des revendications 12 ou 13, **caractérisé en ce que** le gaz sous pression est transporté avec un débit compris entre 1 cm³ et 50 cm³ par cm² de la surface du mandrin et/ou **en ce que** la pression dans le coussin de gaz, au moins dans une section partielle, s'élève à environ 1 bar et 6 bar.

15. Dispositif selon l'une quelconque des revendications 12 à 14, **caractérisé en ce que** la forme tubulaire peut être pressée et/ou est radialement pressée vers l'intérieur, de telle sorte qu'un coussin de gaz non homogène par rapport à son extension radiale peut-être produit/est produit.
